# EUROPEAN PATENT APPLICATION

(11) **EP 4 679 546 A1**
(43) Date of publication of application: **14.01.2026**
(21) Application number: 24826273.5
(22) Date of filing: 20.06.2024
(51) Int. Cl.: H01M 10/04, G01B 11/27

(54) **APPARATUS FOR ADHERING SEPARATORS**

(30) Priority: 23.06.2023 KR 20230081438; 19.06.2024 KR 20240079508
(71) Applicant: LG Energy Solution, Ltd., Seoul 07335 (KR)
(72) Inventor: KEUM, Dongyeon, Daejeon 34122 (KR); LEE, Hee Moon, Daejeon 34122 (KR); BAEK, Ju Hwan, Daejeon 34122 (KR); JO, Kwangun, Daejeon 34122 (KR); KIM, Jungwon, Daejeon 34122 (KR); JEONG, Dohwan, Daejeon 34122 (KR)
(74) Representative: Goddar, Heinz J.
(86) International application number: PCT/KR2024/008539
(87) International publication number: WO 2024/262958

(57) **Abstract**

A separator adhesion apparatus according one embodiment of the present disclosure adheres stacked separators of an electrode assembly in which a separator and an electrode are alternately stacked, the separator adhesion apparatus comprising: a main body, and a first adhesive member and a second adhesive member provided on an outer surface of the main body, wherein the first adhesive member is disposed so as to adhere the separator in a direction perpendicular to an advancing direction of the electrode assembly, and wherein the second adhesive member is disposed so as to adhere the separator along an advancing direction of the electrode assembly.

## Description

### [TECHNICAL FIELD]

### Cross Citation with Related Application(s)

This application claims priority from and the benefit of Korean Patent Application No. 10-2023-0081438 filed on June 23, 2023 and Korean Patent Application No. 10-2024-0079508 filed on June 19, 2024 in the Korean Intellectual Property Office, the disclosures of which are incorporated herein by reference in their entirety.

The present disclosure relates to an apparatus for adhering a separator of an electrode assembly, and more particularly, to an apparatus capable of simultaneously adhering a long side and a short side of a separator.

### [BACKGROUND]

In modern society, as portable devices such as a mobile phone, a notebook computer, a camcorder and a digital camera, and an energy storage system (ESS) have been daily used, technologies of a field related thereto has been actively developed. In addition, as a secondary battery capable of being charged and discharged is used as a power source for an electric vehicle (EV), a hybrid electric vehicle (HEV), a plug-in hybrid electric vehicle (P-HEV) and the like as a solution for solving air pollution and the like caused by existing gasoline vehicles using fossil fuel, a necessity for the development of the secondary battery is increasing.

Currently commercialized secondary batteries include a nickel cadmium battery, a nickel hydrogen battery, a nickel zinc battery, a lithium secondary battery, and the like, and among these batteries, the lithium secondary battery has come into the spotlight because it has advantages, for example, being freely charged and discharged, and having very low self-discharge rate and high energy density.

The lithium secondary battery includes: an electrode assembly in which a positive electrode plate and a negative electrode plate, to which the positive electrode active material and the negative electrode active material are applied, are disposed with a separator interposed therebetween; and an exterior material, i.e., a battery case, configured to seal and house the electrode assembly together with an electrolyte.

The electrode assembly includes a half-cell composed of a first electrode-a separator stacked form, a mono-cell composed of a first electrode-a separator-a second electrode stacked form, and a bi-cell composed of a first electrode-a separator-a second electrode-a separator-a first electrode stacked form. For example, the electrode assembly is a stack cell in which multiple mono-cells are stacked and a half-cell is placed on the uppermost side.

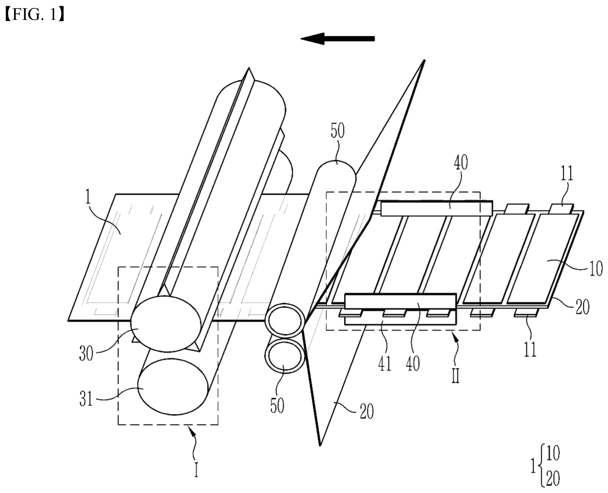

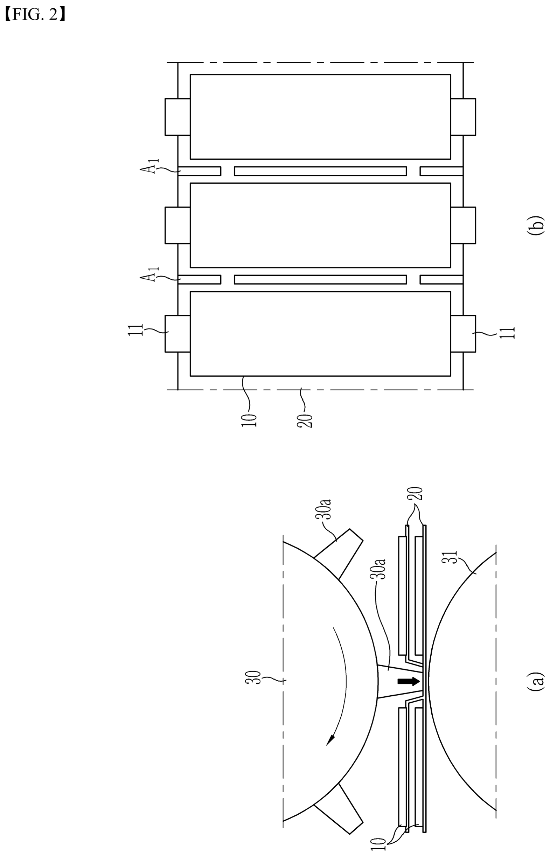

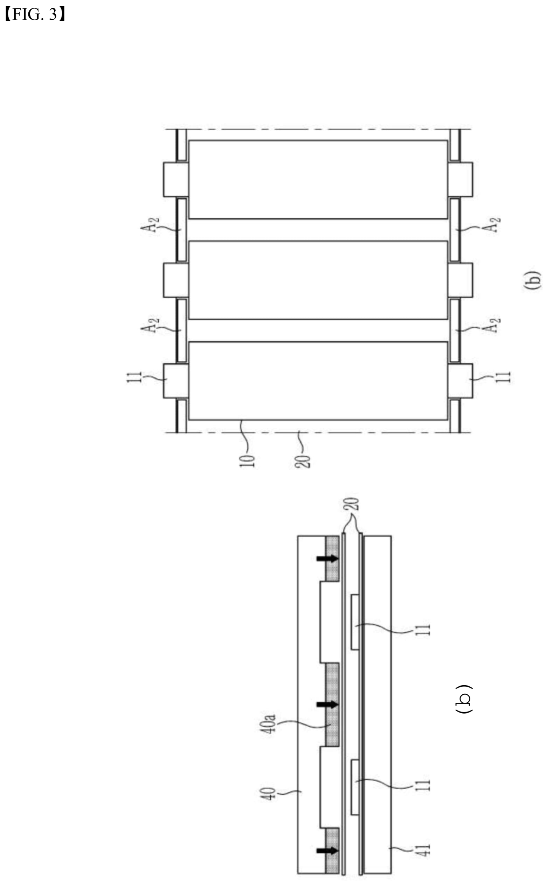

FIG. 1 shows a conventional separator adhesion apparatus. FIG. 2 shows a partial enlarged view for the case of adhering a long side of the separator in the separator adhesion apparatus of FIG. 1. FIG. 3 shows a partial enlarged view for the case of adhering a short side of the separator in the separator adhesion apparatus of FIG. 1.

A conventional separator adhesion apparatus includes a long side adhering unit 30 and a short side adhering unit 40, and further includes a nip roller 50.

First, the electrode plates 10 and separators 20 of the electrode assembly 1 are alternately stacked, and the surplus portions of the stacked plurality of separators 20 are adhered by a separator adhesion apparatus. In the electrode assembly 1, there is an area where only the separator 20 exists on the outer peripheral side of the electrode plates 10, which is referred to as the surplus portion for convenience. If the surplus portions of the separator 20 are not fixed, the surplus portions may be folded or torn in the transport process of the electrode assembly 1, so that the electrode plates 10 may be exposed. If the exposed positive and negative electrodes contact into contact with each other, fire may break out due to internal short circuit. That is, safety of the lithium secondary battery may become an issue.

Therefore, in the conventional separator adhesion apparatus, the long side and short side of the surplus portions of the separator 20 of the electrode assembly 1 are adhered by the long side adhering unit 30 and the short side adhering unit 40, respectively. The portion marked as "I" in FIG. 1 shows the case where the long side of the surplus portions of the separator 20 is adhered by the long side adhering unit 30. The long side of the surplus portions of the separator 20 is interposed between the long side adhering unit 30 and the support unit 31 and heated, thereby thermally adhering the stacked separator 20. The portion marked as "II" in FIG. 1 shows the case where the short side of the surplus portions of the separator 20 is adhered by the short side adhering unit 40. The short side of the surplus portions of the separator 20 is interposed between the short side adhering unit 40 and the support unit 41 and heated, thereby thermally adhering the separator 20 stacked up and down.

The long side adhering unit 30 is rotatably driven by a servo motor, and as shown in the enlarged view of FIG. 2, only the surplus portions of the separator 20 between the electrode plates 10 are pressed and adhered by a heating tip 30a of the long side adhering unit 40. Similarly, the area where the separator 20 is adhered is marked as "A₁".

The short side adhering unit 40 is driven up and down by a linear motor, and as shown in the enlarged view of FIG. 3, only the surplus portions of the separator 20 between the electrode leads 11 are pressed and adhered by the heating tip 40a of the short side adhering unit 40. The area where the separator 20 is adhered is marked as "A₂".

In such a conventional separator adhesion apparatus, the long side adhering unit 30 and the short side adhering unit 40 are separately provided to perform a process of adhering the long side of the separator 20 and a process of adhering the short side of the separator 20, respectively. In such a conventional separator adhesion apparatus, there are limitations in that the double burden of inspecting and adjusting the alignment accuracy of the electrode assembly is increased in each of the adhesion processes using the long side adhering unit 30 and the short side adhering unit 40, and a defective rate is higher when inspecting and adjusting the alignment accuracy of the electrode assembly in only one side of them.

Therefore, there is a need to develop a method that can adhere the long side and the short side of the separator 20 at once in one process, thereby improving the accuracy of the process and also increasing the efficiency of the process so as not to press the electrode plate 10 and the electrode lead 11.

### [DETAILED DESCRIPTION OF THE INVENTION]

### [Technical Problem]

It is an object of the present disclosure to provide a separator adhesion apparatus that can adhere the long side and the short side of the separator at once in one process, thereby increasing the efficiency of the process and also improving the accuracy of the process so that the electrode plate and the electrode lead are not adhered.

It is another object of the present disclosure to ensure that even a single separator adhesion apparatus can be applied to the process of adhering separators of electrode assemblies with various standards.

However, the problem to be solved by embodiments of the present disclosure is not limited to the above-described problems, and can be variously expanded within the scope of the technical idea included in the present disclosure.

### [Technical Solution]

According to an embodiment of the present disclosure, there is provided a separator adhesion apparatus which adheres stacked separators of an electrode assembly in which a separator and an electrode are alternately stacked, the separator adhesion apparatus comprising: a main body, and a first adhesive member and a second adhesive member provided on an outer surface of the main body, wherein the first adhesive member is disposed so as to adhere the separator in a direction perpendicular to an advancing direction of the electrode assembly, and wherein the second adhesive member is disposed so as to adhere the separator along an advancing direction of the electrode assembly.

The main body may have a columnar shape, the first adhesive member may be disposed along the longitudinal direction of the main body, and the second adhesive member may be disposed along an outer peripheral surface of the main body.

The first adhesive members are provided in plural numbers, and the plurality of first adhesive members may be respectively arranged in parallel in a plurality of columns, and the second adhesive members are provided in plural numbers, and the plurality of second adhesive members may be each disposed between two adjacent first adhesive members.

The plurality of the first adhesive members may be selectively detachable in the whole or a part of the plurality of columns.

The first adhesive member may be partitioned into plural parts and arranged in a row in a single column, and the first adhesive member partitioned into plural parts may be selectively detachable in whole or in part.

The first adhesive member may comprise a protrusion part disposed along the longitudinal direction of the first adhesive member.

The first adhesive member may comprise a coupling part capable of coupling the first adhesive member to the main body.

The second adhesive member may comprise a position adjustment part that is disposed apart from the first adhesive member but is movable in a direction parallel to the first adhesive member to adjust the position of the second adhesive member; and an adhesion part that is disposed along an advancing direction of the electrode assembly from a side of the position adjustment part and adheres the separator.

The second adhesive member further comprises a moving rail spaced apart from the first adhesive member on the outer surface of the main body and disposed in parallel with the first adhesive member, and the position adjustment part may be movable along the moving rail.

The moving rail of the second adhesive member comprises a plurality of mounting grooves disposed in a column along the moving rail, and the position adjustment part of the second adhesive member may be mounted to a mounting groove at a desired position among the plurality of mounting grooves of the moving rail.

The first adhesive member may be provided in plural numbers and disposed in parallel in a plurality of columns, and the position adjustment part and the moving rail of the second adhesive member may be disposed between two adjacent first adhesive members.

The adhesion part of the second adhesive member may be provided one by one to both sides centered on the position adjustment part.

The adhesion part of the second adhesive member may comprise a protrusion part disposed along the extending direction of the adhesion part.

A height of the position adjustment part from the main body may be lower than a height of the adhesion part from the main body.

The width of the position adjustment part is larger than the width of an electrode lead of the electrode assembly, and the position adjustment part is disposed on the electrode lead of the electrode assembly, so that the electrode lead may not be adhered when adhering one side of the electrode assembly by the adhesion part.

The second adhesive member comprises a base part and an adhesion part disposed on the base part, the adhesion part comprises a pair of protrusion parts, wherein the pair of protrusion parts may be disposed apart from each other on both sides of the adhesion part, and an area spaced apart from each other between the pair of protrusion parts may be disposed on the electrode lead of an electrode assembly, wherein each of the pair of protrusion parts may be disposed on both sides of the electrode lead to adhere the separator on both sides of the electrode lead by pressing or heating.

The adhesion part of the second adhesive member has a strength enough to adhere the separator, but may have an elastic force enough to prevent the electrode plate or electrode lead of the electrode assembly from being cracked even when an electrode plate or electrode lead is pressed by the second adhesive member.

The material of the adhesion part of the second adhesive member may be made of any one of rubber, Teflon, polymer plastic, and engineering plastic, or a mixture thereof.

The pair of protrusion parts is each disposed on the separator on both sides of the electrode lead, but may be disposed so as to overlap with a part of an electrode plate of the electrode assembly or a part of the electrode lead.

Each of the pair of protrusion parts further comprises a first tapered part, wherein the first tapered part may be provided at the end of the adhesion part where the pair of protrusion parts face each other.

Each of the pair of protrusion parts further comprises a second tapered part, wherein the second tapered part may be provided at the end where the protrusion parts of each of the adhesion parts provided at both ends of the main body face each other.

The second adhesive member further comprises a cover disposed on the adhesion part, wherein the cover further comprises opening parts on both sides in which the protrusion parts are exposed, and the cover is coupled to the base part, and the remaining parts of the adhesion part excluding the protrusion parts may be interposed and fixed between the cover and the base part.

The base part comprises a coupling part, the cover comprises a coupling hole, and the cover penetrates through the coupling hole by a fastener of the second adhesive member, so that the base part may be coupled to the coupling part.

The first adhesive member comprises a mounting part having steps at both ends so that the second adhesive member is mounted, wherein the position of the second adhesive member can be adjusted in the longitudinal direction of the main body within the mounting part.

The first adhesive member may comprise a base part formed along the longitudinal direction of the first adhesive member and coupled to the main body; and an adhesion part formed along the longitudinal direction of the base part and coupled onto the base part.

The adhesion part of the first adhesive member may be made of metal, or may be made of any one of rubber, Teflon, polymer plastic, engineering plastic, or a mixture thereof.

The adhesion part of the first adhesive member may be divided along the longitudinal direction of the first adhesive member and partitioned into plural parts.

The first adhesive member and the second adhesive member adhere areas spaced from the edges of the electrodes, wherein the first adhesive member may adhere a long side of the electrode assembly, and the second adhesive member may adhere a short side of the electrode assembly.

The electrode assembly is connected in plural numbers and provided in a sheet shape, the first adhesive member adheres the separator in the area between adjacent electrodes, and the second adhesive member may adhere the edge parallel to the advancing direction of the electrode assembly sheet, but may not adhere an electrode lead.

The separator adhesion apparatus further comprises a support unit disposed so as to face the main body, wherein the electrode assembly may passe between the main body and the support unit.

The separator adhesion apparatus may further comprise an inspection unit that inspects the alignment accuracy of the electrode assembly in at least one of the front and rear ends of the advancing direction of the electrode assembly.
the first adhesive member and the second adhesive member may adhere the separator by pressing or heating.

In addition, there can be provided an electrode assembly produced by the separator adhesion apparatus according to the above-mentioned embodiments.

### [Advantageous Effects]

According to a separator adhesion apparatus of the present disclosure, it is possible to adhere a long side and a short side of the separator at once in one process, thereby increasing the efficiency of the process and also improving the accuracy of the process so that the electrode plate and the electrode lead are not adhered. Also, it is possible to ensure that even a single separator adhesion apparatus can be applied to the process of adhering separators of electrode assemblies of various standards.

In addition, the process can be advanced using the separator adhesion apparatus of the present disclosure, thereby reducing the defective rate of the produced electrode assembly and improving the quality of the electrode assembly.

The effects of the present disclosure are not limited to the effects mentioned above and additional other effects not described above will be clearly understood from the detailed description of the appended claims by those skilled in the art.

### [BRIEF DESCRIPTION OF THE DRAWINGS]

FIG. 1 shows a conventional separator adhesion apparatus.
FIG. 2 shows a partial enlarged view for the case of adhering a long side of the separator in the separator adhesion apparatus of FIG. 1.
FIG. 3 shows a partial enlarged view for the case of adhering a short side of the separator in the separator adhesion apparatus of FIG. 1.
FIG. 4 shows a separator adhesion apparatus according to an embodiment of the present disclosure.
FIGS. 5 and 6 are partial cross-sectional views of the separator adhesion apparatus of FIG. 4, respectively.
FIG. 7 is a reference diagram of the separator adhesion apparatus of FIG. 4.
FIG. 8 shows a modified embodiment of the separator adhesion apparatus of FIG. 4.
FIG. 9 shows a process of adhering a separator of an electrode assembly with the separator adhesion apparatus of FIG. 4.
FIGS. 10 to 12 show a pressing area which presses a separator of an electrode assembly with the separator adhesion apparatus according to an embodiment of the present disclosure.
FIG. 13 shows a separator adhesion apparatus according to another embodiment of the present disclosure.
FIG. 14 is an exploded perspective view of the separator adhesion apparatus of FIG. 13.
FIG. 15 is a partial enlarged view of the separator adhesion apparatus of FIG. 13.
FIG. 16 is an exploded perspective view of the first adhesive member of FIG. 15.
FIG. 17 is an exploded perspective view of the second adhesive member of FIG. 15.
FIG. 18 is a front view of the separator adhesion apparatus of FIG. 13.
FIG. 19 is a partial enlarged view of FIG. 18.
FIG. 20 shows a process of adhering a separator of an electrode assembly with the separator adhesion apparatus of FIG. 13.
FIGS. 21 and 22 each exemplarily show an adhesion area where a separator of an electrode assembly is adhered with a separator adhesion apparatus according to an embodiment of the present disclosure.
FIG. 23 shows an embodiment of the separator adhesion apparatus according to FIG. 4.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

Below, exemplary embodiments of the present disclosure will be described with reference to the accompanying drawings.

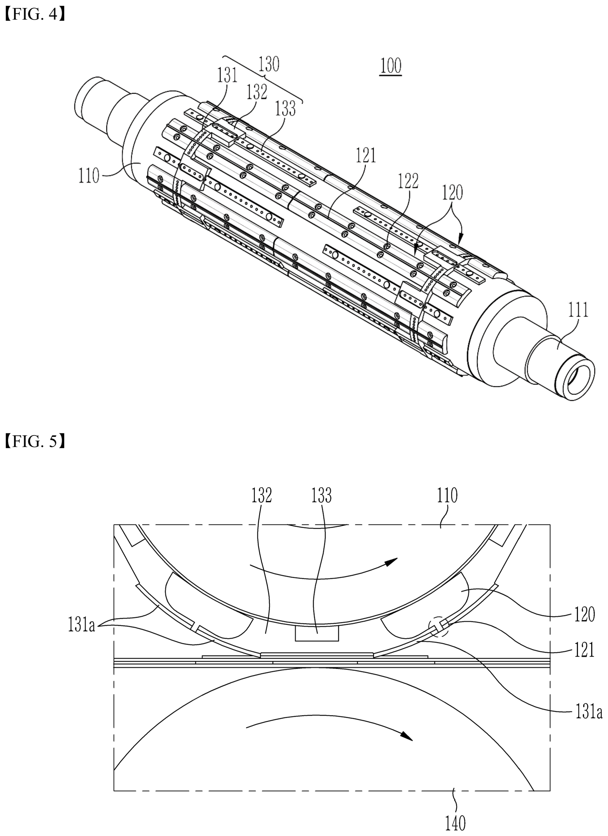

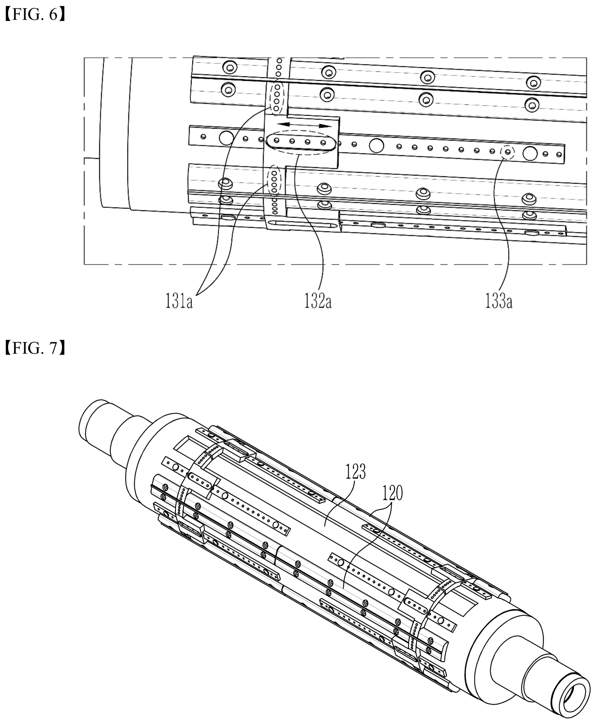

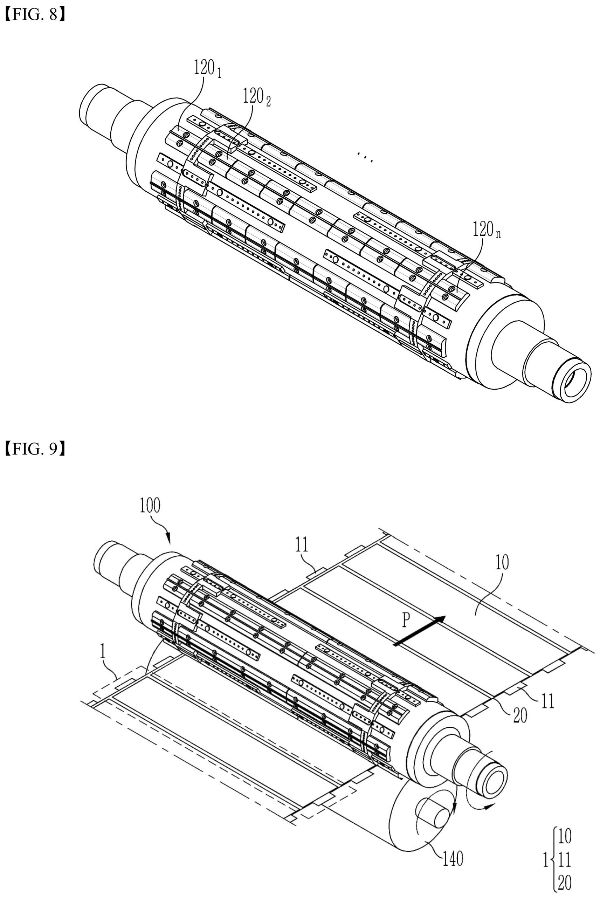

FIG. 4 shows a separator adhesion apparatus according to an embodiment of the present disclosure. FIGS. 5 and 6 are partial cross-sectional views of the separator adhesion apparatus of FIG. 4, respectively. FIG. 7 is a reference diagram of the separator adhesion apparatus of FIG. 4. FIG. 8 shows a modified embodiment of the separator adhesion apparatus of FIG. 4.

The separator adhesion apparatus 100 according to FIG. 4 largely includes a main body 110, and a first adhesive member 120 and a second adhesive member 130 provided on an outer surface of the main body.

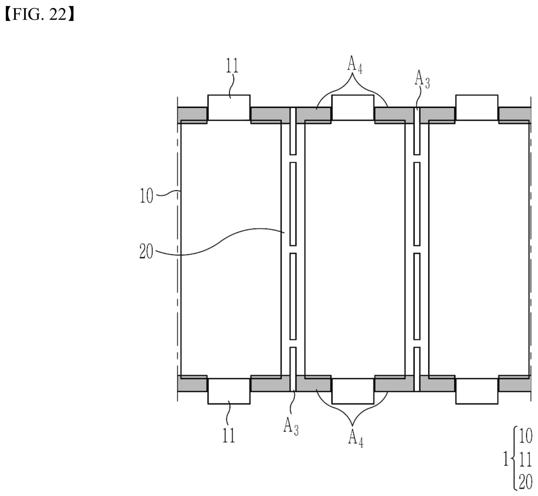

The main body 110 may be, for example, a columnar shape, and may be, for example, cylindrical (cylinder-shaped). The main body 110 may be provided in a pair with a support unit 140 (see FIG. 22). An electrode assembly 1 (see FIG. 1) passes between the main body 110 and the support unit 140. When the main body 110 presses toward the separator 20 of the electrode assembly 1, the electrode assembly 1 is supported by the support unit 140. Thereby, the separator 20 can be effectively adhered by the pressing force and/or heating of the first adhesive member 120 and the second adhesive member 130 of the electrode assembly 1.

Both ends of the main body 110 may be further provided with a shaft 111 formed on the central axis along the longitudinal direction of the main body 110. Power is transmitted to the main body 110 via the shaft 111. For example, the shaft 111 is rotated by a motor connected to the shaft 111, whereby the main body 110 may also perform a rotational motion as shown in FIG. 5. The present disclosure is not limited to those shown in the figure, and is intended to cover various modifications and variations. In some cases, the shaft 111 may perform a reciprocating motion in the up-down direction or left-right direction, i.e., in a linear direction, by the motor, so that the main body 110 may also perform a reciprocating motion.

The materials of the main body 110, the shaft 111, and the support unit 140 are sufficient if they have rigidity and are not deformed by the heat generated from the first adhesive member 120 and the second adhesive member 130, and also can be selected from various materials so as to adapt to the environment in which the present disclosure is realized.

A first adhesive member 120 and a second adhesive member 130 are respectively provided on the outer surface of the main body 110. The first adhesive member 120 is formed along the longitudinal direction of the main body 110. The second adhesive member 130 is formed along a circumference of the main body 110. The first adhesive member 120 and the second adhesive member 130 can adhere a stacked separator 20 by pressing and/or heating the separator 20. For example, the first adhesive member 120 and the second adhesive member 130 can thermally adhere or thermally fuse the separator 20. However, the present disclosure is not limited thereto, and any method capable of adhering the separator 20 can be applied.

When a plurality of electrode assemblies 1 advance and pass through the main body 110 (e.g., when a plurality of electrode assemblies 1 are connected to each other and provided in a sheet shape as shown in FIG. 7), the first adhesive member 120 may be disposed, for example, in a direction perpendicular to the advancing direction of the plurality of electrode assemblies 1, and the second adhesive member 130 may be disposed along the advancing direction of the plurality of electrode assemblies 1. In addition, for example, the first adhesive member 120 may adhere the long side of the electrode assembly 1, and the second adhesive member 130 may adhere the short side of the electrode assembly 1. Referring to (b) of FIG. 2, the area "P₁" in the separator 20 may be adhered by the first adhesive member 120. Referring to (b) of FIG. 3, the area "P₂" in the separator 20 may be adhered by the second adhesive member 130.

When the electrode assembly 1 is connected in plural numbers and provided in a sheet shape, the first adhesive member 120 adheres the separator 20 in the area between the adjacent electrode plates 10, and the second adhesive member 130 adheres the edge parallel to the advancing direction of the electrode assembly 1 sheet, but does not press the electrode lead 11. For reference, throughout this specification, the electrode lead 11 is a concept including an electrode tab. The present disclosure is not limited to those described above, and the arrangement of the first adhesive member 120 and/or the second adhesive member 130 may be modified or changed so as to adapt to the environment to which the present disclosure is applied.

The second adhesive member 130 may be provided, for example, one by one each at both ends, a total of two. The second adhesive member 130 may be provided one by one each at both ends of the main body 110 to match the shape of the two ends of the electrode assembly 1. However, the present disclosure is not limited to those described above, and the number of the first adhesive member 120 and/or the second adhesive member 130 may be modified or changed so as to adapt to the environment to which the present disclosure is applied.

More specifically, the first adhesive member 120 is formed along the first direction (e.g., the long side) of the main body 110, and the second adhesive member 130 is formed along the second direction (e.g., the short side) of the main body 110. For example, when the main body 110 is cylindrical as shown in FIG. 4, the first adhesive member 120 is formed along the longitudinal direction of the main body 110, and the second adhesive member 130 is formed in a circular shape along the outer peripheral surface of the main body 110.

The first adhesive member 120 may be provided in one or plural numbers. More specifically, if the long side/length direction of the main body 110 is called a "column", the first adhesive member 120 may be provided in one column or plural columns. The number of the first adhesive members 120 may be appropriately selected according to the dimensions of the main body 110 (the diameter of the main body 110 and the circumference of the circle resulting therefrom in the case of FIG. 4), or may be appropriately selected according to the distance between the areas A₁ (see FIG. 2) on the long sides of both sides with the electrode plates 10 interposed therebetween.

When the first adhesive members 120 and the second adhesive members 120 are respectively provided in plural numbers, the plurality of the first adhesive members 120 may be arranged in parallel in plural columns, and the plurality of the second adhesive members 130 may be respectively disposed between two adjacent first adhesive members 120. That is, the first adhesive member 120 and the second adhesive member 120 may be disposed alternately.

As shown in FIG. 7, a plurality of first adhesive members 120 may be arranged in parallel in plural columns, but may be coupled to the main body 110 selectively in all columns or in some columns.

Further, in some cases, as shown in FIG. 8, the first adhesive member 120 may be partitioned and provided into plural parts even in one column. That is, the first adhesive members 120₁, 120₂, ... 120ₙ partitioned into plural parts may be arranged in a line to form one column. Even in this case, the whole or a part of the first adhesive members 120₁, 120₂, ... 120ₙ arranged in one column and partitioned into plural parts may be selectively coupled to the main body 110.

As shown in FIG. 4, the first adhesive member 120 may further include a protrusion part 121 formed along the long side/length direction of the first adhesive member 120 (long side/length direction of the main body 110). The protrusion part 121 may have, for example, a protruding shape formed along the long side/length direction of the first adhesive member 120. Referring to the partial cross-sectional view of FIG. 5, when the separator 20 is pressed by the protrusion part 121, the width of the protrusion part 121 is smaller than the entire width of the first adhesive member 120, the force for pressing the separator 20 per cross-sectional area is increased, so that the separator 20 can be more effectively adhered. In addition, by further providing the protrusion part 121 for pressing the separator 20, the dimensions of the first adhesive member 120 can be more freely designed and changed.

Furthermore, as shown in FIG. 4, the first adhesive member 120 may be provided detachably from the main body 110, and the first adhesive member 120 may further include a coupling part 122 so that the first adhesive member 120 can be coupled to the main body 110. In this case, the first adhesive member 120 must have a width enough to include the coupling part 122, but in such a case, there is a risk of pressing the electrode plate 10 in addition to the separator 20. To prevent this, the first adhesive member 120 may be made to have a sufficient width and may further comprise a protrusion part 121 so that only the separator 20 between the electrode plates 10 can be pressed even while including the coupling part 122.

However, the present disclosure is not limited to those described above, and in some cases, if the width of the first adhesive member 120 is formed to be sufficiently narrow to such a degree to press the separator 20 between the electrode plates 10, a protrusion part 121 may not be included.

Meanwhile, the first adhesive member 120 is made integrally with the main body 110 and thus may not be separated, but as described above, the first adhesive member 120 may be provided detachably from the main body 110. When the first adhesive member 120 is provided in a detachable manner, a mounting part 123 in which the first adhesive member 120 is mounted as shown in FIG. 7 may be further included on the main body 110. The mounting part 123 may be provided in a recessed shape on the main body 110 so that the first adhesive member 120 may be seated within the mounting part 123. Furthermore, the coupling part 122 may be, for example, a bolt, and the mounting part 123 may be provided with a bolt groove (not shown) that enables bolt coupling. The first adhesive member 120 is seated on the mounting part 123, and then the first adhesive member 120 can be bolted to the main body 110 by the coupling part 122 (bolt). The method by which the first adhesive member 120 is coupled to the main body 110 is not limited to those described above, and for example, the coupling part 122 is not illustrated in the present disclosure, but can be modified or changed in various ways, such as being realized by an insertion coupling manner.

Meanwhile, when a plurality of the first adhesive members 120 are provided in a detachable manner, the whole or a part of the plurality of the first adhesive members 120 can be selectively combined to match electrode assemblies 1 of various dimensions and mounted on the main body 110. Thereby, the separator adhesion process can be performed to match electrode assemblies 1 of various dimensions even with one separator adhesion apparatus.

Referring to FIG. 4 again, the second adhesive member 130 largely includes an adhesion part 131 that presses for adhering the separator 20, a position adjustment part 132 for moving the second adhesive member 130 to adjust its position, and a moving rail 133 along which the position adjustment part 132 can move.

The position adjustment part 132 is disposed apart from the first adhesive member 120 and is movable along a direction parallel to the first adhesive member 120. When the first adhesive members 120 are provided in plural numbers, the position adjustment part 132 can be disposed in parallel to the first adhesive member 120 between two adjacent first adhesive members 120.

The position adjustment part 132 can be moved along the moving rail 133 located on the outer surface of the main body 110 and connected to the moving rail 133 for convenience of position movement and easy of coupling with the main body 110.

The moving rail 133 is located on the outer surface of the main body 110 and is spaced apart from the first adhesive member 120 and disposed in a direction parallel to the first adhesive member 120. When the first adhesive members 120 are provided in plural numbers, they can be disposed in parallel to the first adhesive member 120 between two adjacent first adhesive members 120.

The adhesion part 131 of the second adhesive member 130 may extend from the side of the position adjustment part 132 and may extend along the outer peripheral surface of the main body 110. The adhesion part 131 may be extended along the advancing direction of the electrode assembly 1. For example, the adhesion part 131 of the second adhesive member 130 may be orthogonal to the extending direction of the first adhesive member 120, and the adhesion part 131 may be extended orthogonally to the movable direction of the position adjustment part 132. The adhesion part 131 may be provided one by one on both sides centered on the position adjustment part 132. For example, the adhesion part 131 may be provided in a wing shape centered on the position adjustment part 132. In addition, the adhesion part 131 is extended in the direction of the short side of the electrode assembly 1.

Referring to the partial enlarged view of FIG. 6, a plurality of the mounting grooves 133a are disposed in a column along the moving rail 133 on the upper surface of the moving rail 133. The position adjustment part 132 may be provided with a mounting hole 132a penetrating the position adjustment part 132, and the mounting groove 133a of the moving rail 133 is exposed through the mounting hole 132a. The position adjustment part 132 may be located at a point to be mounted on the moving rail 133 and then bolted to the mounting groove 133a via the mounting hole 132a. Meanwhile, the present disclosure is not limited to those described above in regard to the coupling method of the second adhesive member 130, and may be coupled in various manners. The present disclosure is intended to cover various modifications and variations, for example, a mounting protrusion part (not shown) may be provided on the lower surface of the position adjustment part 132, thereby capable of being coupled so as to engage with the mounting groove 133a of the moving rail 133.

In addition, the adhesion part 131 of the second adhesive member 130 may further include a protrusion part 131a. The protrusion part 131a may have, for example, a protruding shape formed along the longitudinal direction of the adhesion part 131 (the circumferential direction of the main body 110). Since the width of the protrusion part 131a is smaller than the entire width of the adhesion part 131 of the second adhesive member 130, the force for pressing the separator 20 per cross-sectional area is increased, so that the separator 20 can be adhered more effectively. In addition, by further providing the protrusion part 131a for pressing the separator 20, the dimensions of the adhesion part 131 of the second adhesive member 130 can be more freely designed and changed.

However, the present disclosure is not limited to those described above, and in some cases, if the width of the adhesive portion 131 of the second adhesive member 130 is formed to be sufficiently narrow to such a degree to press only the separator 20 excluding the electrode plate 10, the protrusion part 131a may not be included.

Furthermore, referring to the partial enlarged view of FIG. 5, the position adjustment part 132 of the second adhesive member 130 may engage with the moving rail 133, but the adhesion part 131 of the second adhesive member 130 may be located on the first adhesive member 120. Therefore, even if the adhesion part 131 of the second adhesive member 130 is disposed on the first adhesive member 120, the second adhesive member 130 can be freely adjusted in position in the longitudinal direction of the main body 110. Meanwhile, the present disclosure is not limited to those shown in the figure, and is intended to cover various modifications and changes, for example, if the space in which the first adhesive member 120 and the second adhesive member 130 are disposed is sufficient, the adhesion part 131 of the second adhesive member 130 may not be disposed on the first adhesive member 120, but may be disposed slightly apart from the first adhesive member 120.

Meanwhile, in an illustrative example of FIG. 5, the adhesion part 131 of the second adhesive member 130 may not be disposed on the protrusion part 121 of the first adhesive member 120. This is intended to prevent the protrusion part 121 of the first adhesive member 120 from being unable to properly press the separator 20 due to a step between the adhesion part 131 of the second adhesive member 130 and the protrusion part 121 of the first adhesive member 120.

Since the separator adhesion apparatus 100 according to the present disclosure presses the long side and the short side of the electrode assembly 1 at the same time, the height of the adhesion part 131 of the second adhesive member 130 from the main body 110 and the height of the protrusion part 121 of the first adhesive member 120 from the main body 110 may be equal. When the adhesion part 131 of the second adhesive member 130 includes a protrusion part 131a, the height of the protrusion part 131a of the second adhesive member 130 from the main body 110 and the height of the protrusion part 121 of the first adhesive member 120 from the main body 110 may be equal.

Meanwhile, the height of the position adjustment part 132 of the second adhesive member 130 from the main body 110 is lower than the height of the adhesion part 131 from the main body 110. This is intended to not press the separator 20 by the position adjustment part 132. Therefore, as shown in FIG. 5, a space exists between the position adjustment part 132 and the separator 20. When the separator 20 is pressed by the separator adhesion apparatus 100, the position adjustment part 132 may be disposed on the electrode lead 11 so as not to press the electrode lead 11. The width of the position adjustment part 132 may be larger than the width of the electrode lead 11 of the electrode assembly 1. In summary, the position adjustment part 132 may be disposed on the electrode lead 11 of the electrode assembly 1, so that the electrode lead may not be pressed when one side of the electrode assembly 1 is pressed by the adhesion part 131.

Meanwhile, the method of adhering a separator 20 of the separator adhesion apparatus 100 according to the present disclosure has been described as an illustrative example of a method of pressing the portion where the separator 20 is to be adhered, but the present disclosure is not limited to those described above, and is intended to cover various modifications and changes, for example, it may be a method of pressing the separator 20 while heating the portion where the separator 20 is to be adhered by the first adhesive member 120 and/or the second adhesive member 130 of the separator adhesion apparatus 100, or may be a method of inducing thermal fusion by heating the portion where the separator 20 is to be adhered by the first adhesive member 120 and/or the second adhesive member 130. In the case of the heating method, the separator adhesion apparatus 100 may further include a heating unit (not shown) that heats the first adhesive member 120 and/or the second adhesive member 130.

FIG. 9 shows a process of adhering a separator of an electrode assembly by the separator adhesion apparatus of FIG. 4. The main body 110 provided with the first adhesive member 120 and the second adhesive member 130 of the separator adhesion apparatus 100 may be disposed at the upper part, and the support unit 140 may be disposed at the lower part so as to face it. However, the present disclosure is not limited to those shown in the figure, and it is sufficient if the electrode assembly 1 can pass between the main body 110 and the support unit 140 to press a separator 20, and the arrangement between the main body 110 and the support unit 140 may be variously modified, changed and applied in accordance with the environment to which the present disclosure is realized. In addition, in some cases, instead of the support unit 140, a pair of main bodies 110 may also be engaged with each other to press the separator 20.

The main body 110 and the support part 140 press the separator 20 while rotating in opposite directions. The longitudinal direction of the separator adhesion apparatus 100 is disposed orthogonally to the moving direction of the plurality of electrode assemblies 1. The first adhesive member 120 is disposed on the long side of the electrode assembly 1, and the second adhesive member 130 is disposed on the short side of the electrode assembly 1.

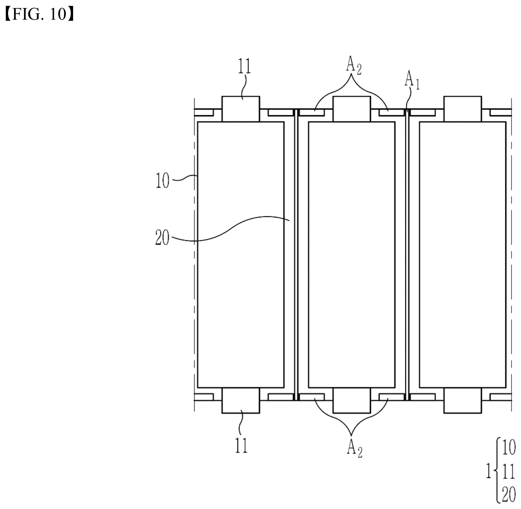

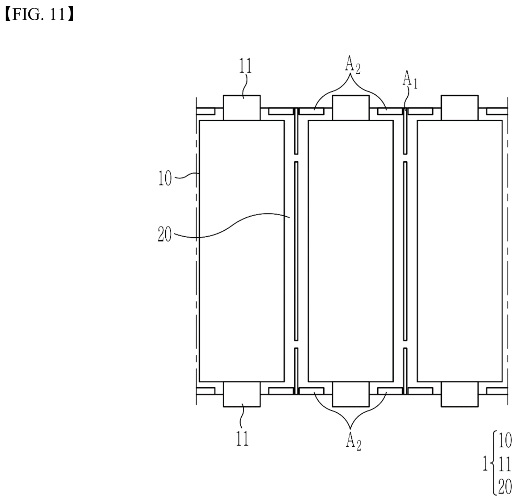

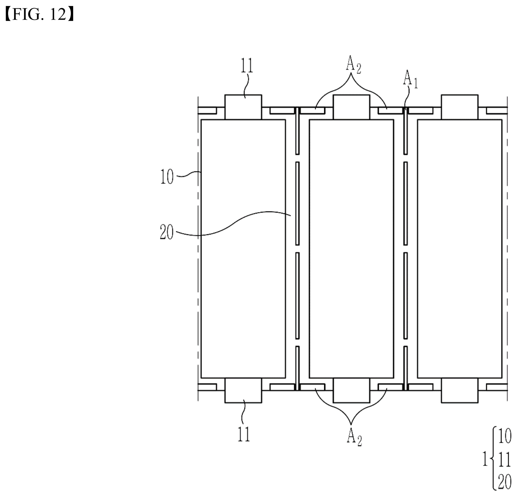

FIGS. 10 to 12 exemplarily show an area which heats and/or presses a separator 20 of an electrode assembly by the separator adhesion apparatus according to an embodiment of the present disclosure. An area A₁ that is heated and/or pressed by a first adhesive member 120 can be formed on the long side of the separator 20 between adjacent electrode plates 10. It is sufficient if the adhesion area A₁ is formed on the separator 20 between adjacent electrode plates 10, the electrode plates 10 are not adhered and the electrode plates 10 are not exposed to the outside. The shape and number of the area A₁ are not particularly limited.

In addition, as shown in FIGS. 10 to 12, an area A₂ that is heated and/or pressed by a second adhesive member 130 can be formed on the short side of the separator 20 except for the portion where the electrode lead 11 is disposed. Similarly, it is sufficient if the pressing area A₂ is formed on the short side of adjacent separators 20, the electrode lead 11 is not adhered, and the electrode plate 10 is not exposed to the outside. The shape and number of the area A₂ are not particularly limited.

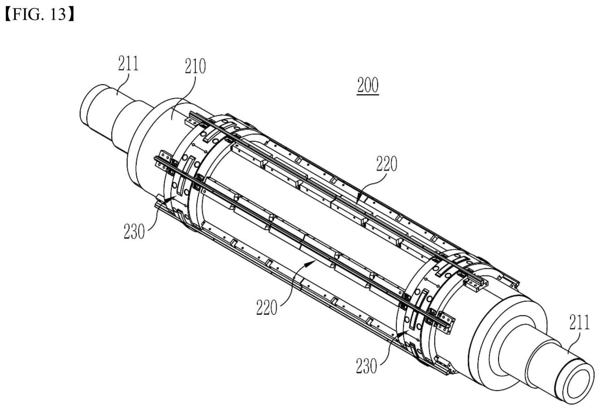

FIG. 13 shows a separator adhesion apparatus according to another embodiment of the present disclosure.

The separator adhesion apparatus 200 according to FIG. 13 largely includes a main body 210, and a first adhesive member 220 and a second adhesive member 230 provided on the outer surface of the main body.

The main body 210 may be, for example, columnar, and may be, for example, cylindrical (cylinder shape). The main body 210 may be provided in a pair with a support unit 140 (see FIG. 22). An electrode assembly 2 (see FIG. 1) passes between the main body 210 and the support unit 140. When the main body 210 presses toward the separator 20 of the electrode assembly 2, the electrode assembly 2 is supported by the support unit 140. Thus, the separator 20 can be effectively adhered by the pressing force and/or heating of the first adhesive member 220 and the second adhesive member 230 of the electrode assembly 2.

Both ends of the main body 210 may be further provided with a shaft 211 formed on the central axis along the length direction of the main body 210. Power is transmitted to the main body 210 via the shaft 211. For example, the shaft 211 may rotate by a motor connected to the shaft 211, and the main body 210 may also perform a rotational motion accordingly. The present disclosure is not limited to those shown in the figure, and is intended to cover various modifications and variations. In some cases, the shaft 211 may perform a reciprocating motion in the up-down direction or left-right direction, i.e., in a linear direction, by a motor, and the main body 210 may also performed a reciprocating motion accordingly.

The materials of the main body 210, the shaft 211, and the support unit 140 are sufficient as long as they have rigidity and are not deformed by the heat generated from the first adhesive member 220 and the second adhesive member 230, and can be variously selected so as to adapt to the environment in which the present disclosure is realized.

A first adhesive member 220 and a second adhesive member 230 are respectively provided on the outer surface of the main body 210. The first adhesive member 220 is formed along the longitudinal direction of the main body 210. The second adhesive member 230 is formed along a circumference of the main body 210. The first adhesive member 220 and the second adhesive member 230 can adhere a stacked separator 20 by pressing and/or heating the separator 20. For example, the first adhesive member 220 and the second adhesive member 230 can thermally adhere or thermally fuse the separator 20. However, the present disclosure is not limited thereto, and any method capable of adhering the separator 20 can be applied.

When a plurality of electrode assemblies 2 advance and pass through the main body 210, the first adhesive member 220 may be disposed, for example, in a direction perpendicular to the advancing direction of the plurality of electrode assemblies 2, and the second adhesive member 230 may be disposed along the advancing direction of the plurality of electrode assemblies 2. Furthermore, for example, the first adhesive member 220 may adhere the long side of the electrode assembly 2, and the second adhesive member 230 may adhere the short side of the electrode assembly 2. Referring to (b) of FIG. 2, the area "P₁" in the separator 20 may be adhered by the first adhesive member 220. Referring to (b) of FIG. 3, the area "P₂" in the separator 20 may be adhered by the second adhesive member 230.

When the electrode assembly 2 is connected in plural numbers and provided in a sheet shape, the first adhesive member 220 adheres the separator 20 in the area between adjacent electrode plates 10, and the second adhesive member 230 adheres the edge parallel to the advancing direction of the electrode assembly 2 sheet, but does not press the electrode lead 11. The present disclosure is not limited to those described above, and the arrangement of the first adhesive member 220 and/or the second adhesive member 230 can be modified and changed so as to adapt to the environment to which the present disclosure is applied.

The second adhesive member 230 may be provided in a total of two sets, for example, by one set each at both ends of the main body 210. The second adhesive member 230 may be provided by one set each at both ends of the main body 210 to match the shape of both ends of the electrode assembly 2. Here, one set means a group consisting of one or a plurality of second adhesive members 230. The present disclosure is not limited to those described above, and the number of the first adhesive member 220 and/or the second adhesive member 230 may be modified or changed so as to adapt to the environment to which the present disclosure is applied.

More specifically, the first adhesive member 220 is formed along the first direction (e.g., the long side) of the main body 210, and the second adhesive member 230 is formed along the second direction (e.g., the short side) of the main body 210. For example, when the main body 210 is cylindrical as shown in FIG. 13, the first adhesive member 220 is formed along the longitudinal direction of the main body 210, and a set of second adhesive members 230 are formed in a circular shape along the outer peripheral surface of the main body 210.

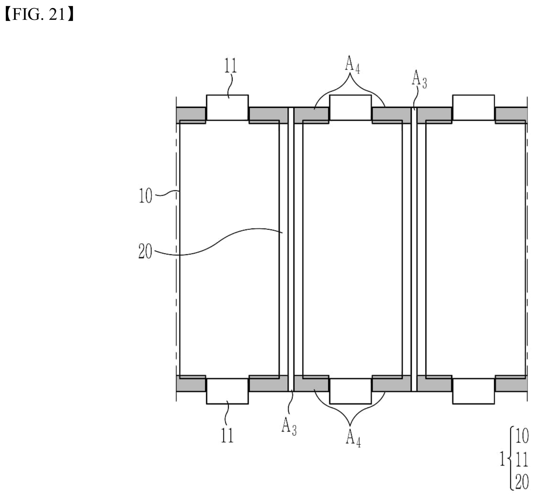

The first adhesive member 220 may be provided in one or plural numbers. More specifically, if the long side/length direction of the main body 210 is called a "column," the first adhesive member 220 may be provided in one column or plural columns. The number of the first adhesive members 220 may be appropriately selected according to the dimensions of the main body 210 (in the case of FIG. 13, the diameter of the main body 210 and the circumference of the circle resulting therefrom), or may be appropriately selected according to the distance between the areas A₃ (see FIG. 21) on the long sides of both sides with the electrode plate 10 interposed therebetween.

When the first adhesive member 220 and the second adhesive member 220 are respectively provided in plural numbers, the plurality of the first adhesive members 220 can be disposed in parallel in plural columns, and the plurality of the second adhesive members 230 can be respectively disposed between two adjacent first adhesive members 220. That is, the first adhesive member 220 and the second adhesive member 220 can be disposed alternately.

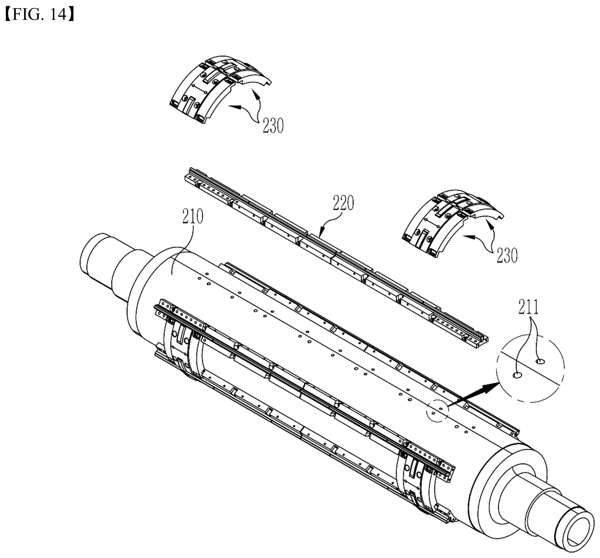

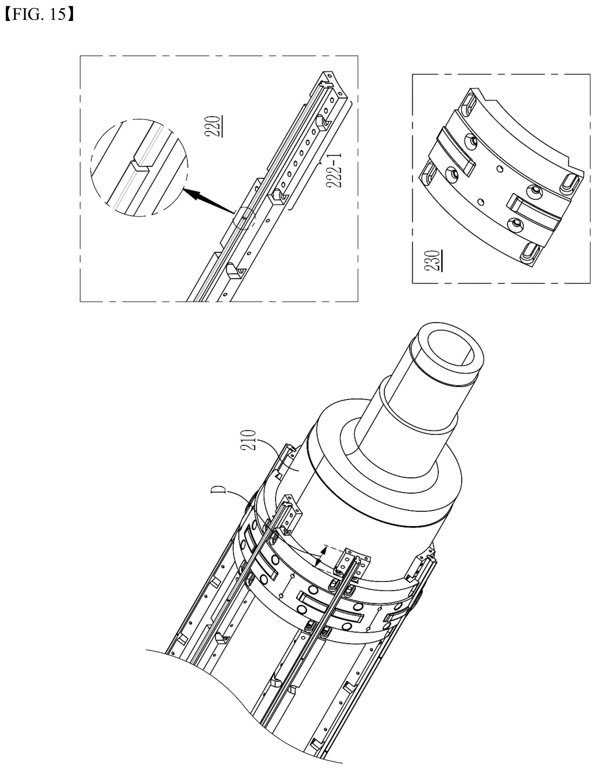

FIG. 14 is an exploded perspective view of the separator adhesion apparatus of FIG. 13. FIG. 15 is a partial enlarged view of the separator adhesion apparatus of FIG. 13.

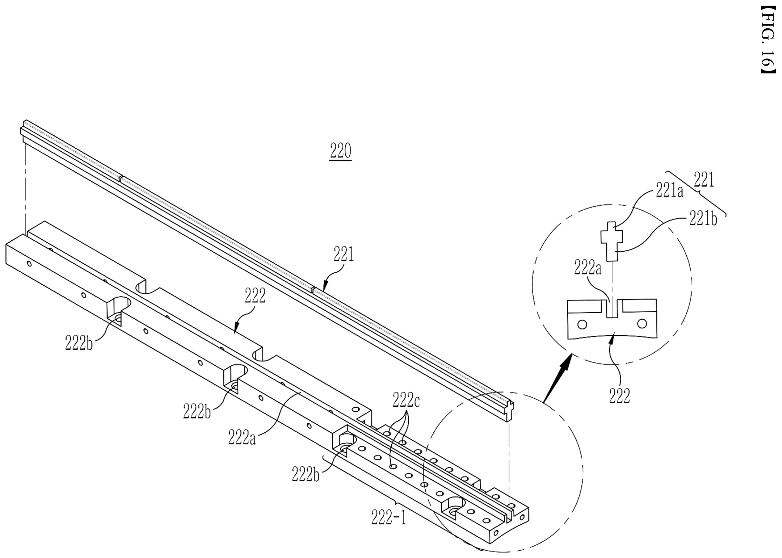

FIG. 14 shows, as an example, a case where one first adhesive member 220 is separated from the main body 210. As shown in FIG. 14, a plurality of first adhesive members 220 may be respectively arranged in parallel in a plurality of columns, and may be selectively coupled to the main body 210 in whole columns or in some columns. Referring to a part of the main body 210 in FIG. 14, which is enlarged and indicated by a dotted line, the main body 210 may include a plurality of coupling holes 211 formed along the longitudinal direction of the main body 210 so that the first adhesive member 220 may be coupled. The first adhesive member 220 will be described in detail later with reference to FIG. 16, and the like.

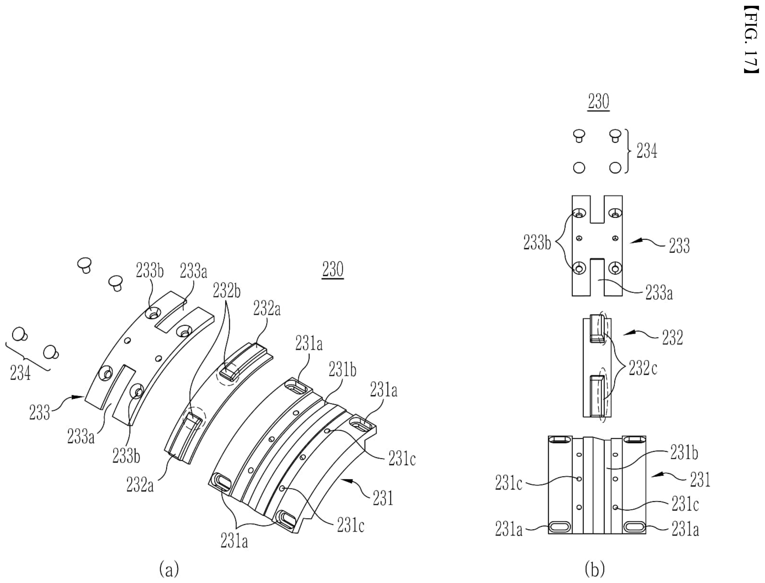

In addition, the second adhesive members 230 provided on both sides of the separated first adhesive member 230 are illustrated separately. Also, the second adhesive members 230 may be respectively provided at both ends of the main body 210 as described above. Further, referring to the partial enlarged view of FIG. 15, it can be seen that one second adhesive member 230 is disposed between two adjacent first adhesive members 220. In this way, the first adhesive member 220 - second adhesive member 230 - first adhesive member 220 - second adhesive member 230 - ... are disposed in this order along a circumference of the main body 210. The second adhesive member 230 will be described in detail later with reference to FIG. 17, and the like.

FIG. 16 is an exploded perspective view of the first adhesive member of FIG. 15.

First, as shown in FIG. 16, the first adhesive member 220 may further include an adhesion part 221 formed along the long side/length direction of the first adhesive member 220 (long side/length direction of the main body 210). The adhesion part 221 may include a lower protrusion part 221b coupled to a mounting part 222a formed concavely along the center of the base part 222. The adhesion part 221 includes an upper protrusion part 221a, and the upper protrusion part 221a may have, for example, a protrusion shape formed along the long side/ length direction of the first adhesive member 220. When the adhesion part 221 presses the separator 20, the width of the adhesion part 221 is smaller than the entire width of the first adhesive member 220, so that the force for pressing the separator 20 per cross-sectional area becomes larger, and the separator 20 can be more effectively adhered. In addition, by further providing an adhesion part 221 for pressing the separator 20, the dimensions of the first adhesive member 220 can be more freely designed and changed. For example, when the present disclosure is realized so that the width of the area A₄ of the separator adhered by the first adhesive member 220 is very small, a separate additional adhesion part 221 is provided rather than pressing the entire width of the first adhesive member 220, so that the dimensions of the width of the area A₄ can be more easily adjusted. In further detail, the first adhesive member 220 must have a sufficient width to include the coupling part 222b described below, in which case there is a risk of pressing the electrode plate 10 in addition to the separator 20. To prevent this, the first adhesive member 220 may be made to have a sufficient width and may further include an adhesion part 221 so as to press only the separator 20 between the electrode plates 10 while including the coupling part 222 b.

The adhesion part 221 may be made of a metal material having high rigidity, but in some cases, it may be made of a material having appropriate strength and elasticity. That is, it means that while it has a rigidity sufficient to be able to adhere the separator 20, it also has a rigidity and elastic force sufficient to prevent the electrode plate 10 and/or electrode lead 11 from cracking when pressure is applied to the electrode plate 10 and/or electrode lead 11 due to the first adhesion part 220 in some cases. For example, the adhesion part 221 may be made of rubber, Teflon, high-density plastic, engineering plastic, or the like, or the adhesion part 221 may be made of a mixture thereof.

However, the present disclosure is not limited to those described above, and in some cases, if the width of the first adhesive member 220 is formed to be sufficiently narrow to such a degree to press the separator 20 between the electrode plates 10, the adhesion part 221 may not be included. Furthermore, as shown in FIG. 14, the first adhesive member 220 may be provided detachably from the main body 210, and a coupling part 222b may be further included in the base part 222 of the first adhesive member 220 so that the first adhesive member 220 may be coupled to the main body 210. The main body 210 includes a coupling hole 211 as described above in FIG. 14. In this case, the coupling part 222b may also be provided with a coupling hole by way of example. The coupling hole 211 of the main body 210 is aligned with the coupling hole of the coupling part 222b of the first adhesive member 220, and then the first adhesive member 220 can be coupled with a fastener (not shown; e.g., a bolt). The method by which the first adhesive member 220 is coupled to the main body 210 is not limited to those described above, and can be modified or changed in various ways, for example, the coupling part 222b is not illustrated in the present disclosure, but can be realized in an insertion-coupling manner in the coupling hole of the main body 210 including a protrusion part for insertion-coupling.

Meanwhile, when a plurality of the first adhesive members 220 are provided in a detachable manner, all or some of the plurality of first adhesive members 220 can be selectively combined so as to match electrode assemblies 2 of various dimensions and mounted on the main body 210. Thus, the separator adhesion process can be performed so as to match electrode assemblies 2 of various dimensions even with one separator adhesion apparatus.

Furthermore, the upper protrusion part 221a may be formed as one along the longitudinal direction of the first adhesive member 220, or may be divided along the longitudinal direction of the first adhesive member 220 and partitioned into plural parts, as shown in FIG. 16. The partial enlarged view of FIG. 15 also shows an enlarged view of the divided portion of the upper protrusion part 221a for reference. In this case, the area A₃ formed along the long side of the separator 20 of FIG. 22 can also be divided correspondingly and partitioned into plural parts, and the electrolyte can easily penetrate and impregnate between the separators 20 during the wetting process.

The present disclosure is not limited to those described above as an illustrative example in which the upper protrusion part 221a is divided and partitioned, and is intended to cover various modifications and changes. In some cases, the adhesion part 221 may be divided along the longitudinal direction of the first adhesive member 220 and portioned into plural parts, or the first adhesive member 220 itself may be divided along the longitudinal direction of the main body 210 and partitioned into plural parts.

In addition, both ends of the base part 222 of the first adhesive member 220 may further include mounting parts 222-1 to which the second adhesive member 230 may be coupled. The mounting part 222-1 may have a step that is lower than the base part 222. Thereby, even if the second adhesive member 230 is mounted on the mounting part 222-1, the height of the upper end of the first adhesive member 220 and the height of the upper end of the second adhesive member 230 can be kept constant. The mounting part 222-1 may include a plurality of coupling holes 222c to which the second adhesive member 230 can be coupled.

FIG. 17 is an exploded perspective view of the second adhesive member of FIG. 15. (a) of FIG. 17 is a perspective view of each component of the second adhesive member, and (b) of FIG. 17 is an exploded front view of each component of the second adhesive member.

Referring to FIG. 17, the second adhesive member 230 includes a base part 231, an adhesion part 232, a cover 233, and a fastener 234. A plurality of coupling parts 231a are formed on the base part 231. The coupling part 231a may be a coupling hole having an opening shape, and may be provided by at least one on each side of the base part 231. The coupling part 231a of the second adhesive member 230 can be located corresponding to the coupling hole 222c formed in the mounting part 222-1 of the first adhesive member 220, and the coupling part 231a of the second adhesive member 230 and the coupling hole 222c of the first adhesive member 220 can be fastened at once by a fastener (not shown; e.g., a bolt).

Meanwhile, as shown in FIGS. 15 and 16, the mounting part 222-1 of the first adhesive member 220 is provided with a plurality of coupling holes 222c in a column. Also, the coupling parts 231a of the second adhesive member 230 may be respectively disposed corresponding to one of the plurality of coupling holes 222c of the first adhesive member 220. Thereby, the position of the second adhesive member 230 may be adjusted within the mounting part 222-1 of the first adhesive member 220. That is, the position of the second adhesive member 230 (see D of FIG. 15) may be adjusted according to the size of the electrode plate 10 and the separator 20.

A mounting part 231b is provided on the base part 231 and the adhesion part 232 is mounted thereon. According to the embodiment of FIG. 13 and below, the adhesion part 232 of the second adhesive member 230 is heated, and the portion marked as the area A₄ of the separator 20 is heated and/or pressed to adhere between the separators 20. It includes protrusion parts 232a on both sides. The protrusion parts 232a provided on both sides may be spaced apart from each other. Referring to FIG. 21, an electrode lead 11 is located in the area between a pair of protrusion parts 232a, and each of the pair of protrusion parts 232a heats and/or presses an area A₄ located on both sides of the electrode lead 11 to adhere it.

In the separator adhesion apparatus according to the embodiment of FIG. 13 or below, the adhesion part 232 is made of a material having an appropriate strength and elastic force, rather than a metal material having high rigidity. That is, it means that it has a rigidity sufficient to adhere the separator 20, and also has a rigidity and elastic force sufficient to prevent the electrode plate 10 and/or the electrode lead 11 from cracking when pressure is applied to the electrode plate 10 and/or the electrode lead 11 by the second adhesive member 230. For example, the adhesion part 232 may be made of rubber, Teflon, high-density plastic, engineering plastic, or the like. Alternatively, the adhesion part 232 may be a mixture of them. Thereby, since the separator 20 is heated and/or pressed by the adhesion part 232 (more specifically, the protrusion part 232a), there is no risk of cracking the electrode plate 10 or the electrode lead 11even if the adhesion part 232 is disposed on the electrode plate 10 or the electrode lead 11 and the separator 20 is heated and/or pressed. In other words, if the separator 20 is heated and/or pressed with a metal material member while the metal material member is located on the electrode plate 10/electrode lead 11, there is a concern that the electrode plate 10/electrode lead 11 may be damaged. If the second adhesive member 230 is made of a metal material member instead of the protrusion part 232a of the adhesion part 232, it must adhere the separator 20 with keeping a safe distance from the electrode plate 10/electrode lead 11. In the case of heating and/or pressing with the metal material member, the area A₄ of the separator 20 is located apart from the electrode plate 10/electrode lead 11, which may reduce the adhesive area of the separator 20 and cause a slight decrease in the adhesive strength of the separator 20.

However, when the adhesion part 232 is applied to the second adhesive member 230 and the separator 20 is heated and/or pressed by the protrusion part 232a of the adhesion part 232, there is an advantage in that the area A₄ of the separator 20 can be increased without damaging the electrode plate 10/electrode lead 11, even if the protrusion part 232a of the adhesion part 232 is disposed so as to overlap with a part of the electrode plate 10/electrode lead 11.

Furthermore, a first tapered part 232b is provided on the opposing ends of a pair of protrusion parts 232a of the adhesion part 232, so that even if the protrusion part 232a of the adhesion part 232 touches the edge or the vicinity of the electrode plate 10/electrode lead 11, due to the first tapered part 232b, which is a component of the protrusion part 232a of the adhesion part 232, it is possible to further minimize damage to the electrode plate 10/electrode lead 11 and also further increase the degree of adhesion of the protrusion part 232a of the adhesion part 232 to the separator 20.

In addition, each of the pair of protrusion parts 232a of the adhesion part 232 includes a second tapered part 232c. The second tapered part 232c is directed toward the center of the longitudinal direction of the main body 210. In further detail, the second tapered part 232c is included on each of the opposing surfaces between the second adhesive members 230 provided at both ends of the main body 210. Thereby, due to the second tapered part 232c which is a component of the protrusion part 232a of the adhesion part 232 at or near the edge of the electrode plate 10, it is possible to further minimize damage to the electrode plate 10/electrode lead 11 and also further increase the degree of adhesion of the protrusion part 232a of the adhesion part 232 to the separator 20.

Meanwhile, the widths of the pair of protrusion parts 232a may be equal to each other, but may be different from each other. In further detail, if the electrode lead 11 is disposed at the center of the width of the electrode plate 10, it is preferable that the widths of the pair of protrusions 232a are equal to each other, respectively. However, if the electrode lead 11 is slightly deviated and disposed to one side from the center of the width of the electrode plate 10, the width of each of the pair of protrusion parts 232a may be adjusted to be different from each other accordingly. That is, the width of one of the pair of protrusion parts 232a is determined according to the width of one of the separators disposed on both sides based on the electrode lead 11 (for example, the separator located on the left side of the electrode lead 11). Similarly, the width of the other one of the pair of protrusion parts 232a is determined according to the width of the other one of the separators (for example, the separator located on the right side of the electrode lead 11) disposed on both sides based on the electrode lead 11. In summary, the width of each of the pair of protrusion parts 232a can be modified, changed, and adjusted in compliance with the environment in which the present disclosure is embodied.

The adhesion part 232 is coupled to the base part 231 by the cover 233. The adhesion part 232 can be covered by the cover 233 except for the protrusion part 232a. The cover 233 includes an opening part 233a at portions corresponding to a pair of protrusion parts 232a of the adhesion part 232 so that the protrusion parts 232a can be exposed to the outside. Further, the cover 233 includes a coupling hole 233b. The cover 233 and the base part 231 can be connected at once by a fastener 234 in a state in which the coupling hole 233b of the cover 233 and the coupling part 231c of the base part 231 are aligned. Thereby, the adhesion part 232 is inserted and fixed between the cover 233 and the base part 231. The fastener 234 may be, for example, a bolt.

Since the separator adhesion apparatus 200 according to the present disclosure simultaneously presses the long side and the short side of the electrode assembly 2, the height of the upper surface of the protrusion part 232a of the second adhesive member 230 from the main body 210 and the height of the adhesion part 221 of the first adhesive member 220 from the main body 210 may be equal.

Meanwhile, the method of adhering the separator 20 of the separator adhesion apparatus 200 according to the present disclosure has been described as an illustrative example of a method of pressing the portion where the separator 20 is to be adhered, but the present disclosure is not limited to those described above. The method can be applied by modifying and changing in various ways, such as a method of applying pressure while heating the portion where the separator 20 is to be adhered with the first adhesive member 220 and/or the second adhesive member 230 of the separator adhesion apparatus 200, or a method of inducing thermal fusion by heating the portion where the separator 20 is to be adhered with the first adhesive member 220 and/or the second adhesive member 230. In the case of the heating method, the separator adhesion apparatus 200 may further include a heating unit (not shown) that heats the adhesion part 221 of the first adhesive member 220 and/or the adhesion part 232 of the second adhesive member 230.

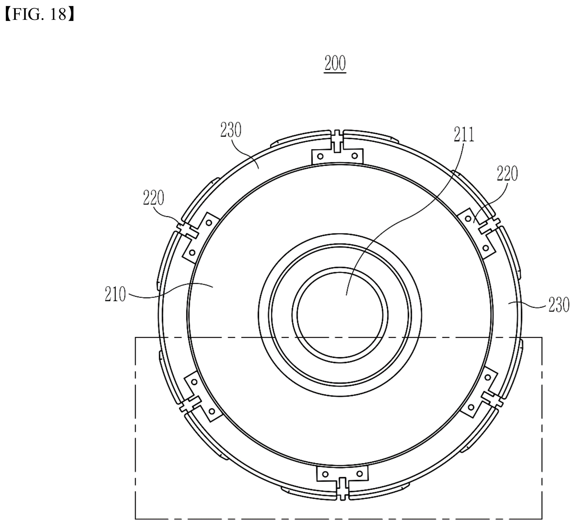

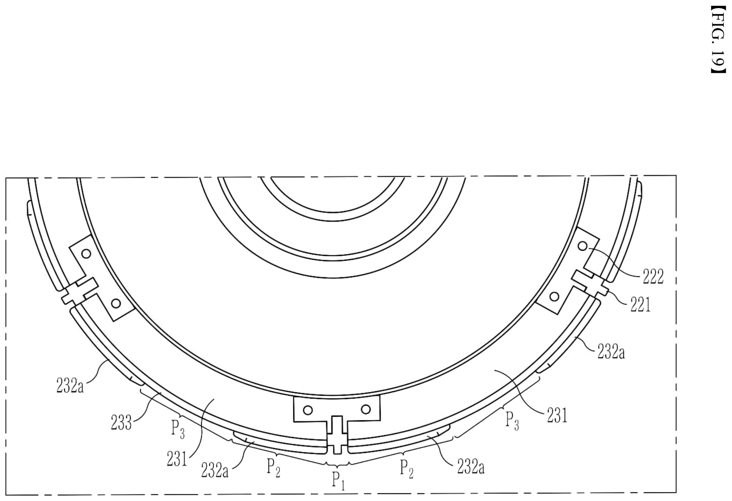

FIG. 18 is a front view of the separator adhesion apparatus of FIG. 13, and FIG. 19 is a partial enlarged view of FIG. 18.

Referring to FIG. 19, at least a part of the area P₁ corresponding to the adhesion part 221 of the first adhesive member 220 is located on the area A₃ of the separator 20 of FIG. 21. Furthermore, the area P₂ corresponding to the protrusion part 232a of the adhesion part 232 of the second adhesive member 230 is located on the area A₄ of the separator 20 of FIG. 21. The area P₃ corresponding between a pair of protrusion parts 232a of the adhesion part 232 of the second adhesive member 230 is located on the electrode lead 11 of FIG. 21.

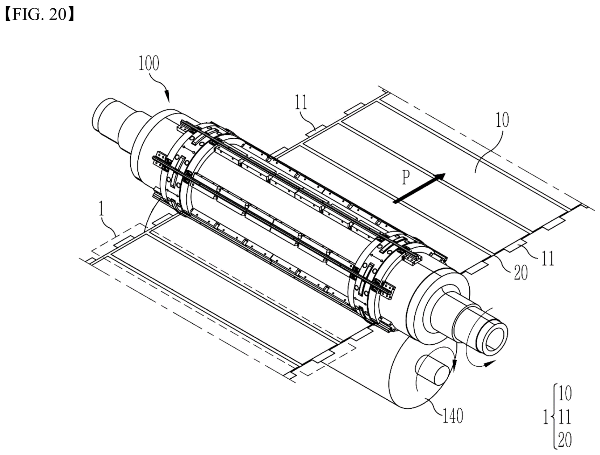

FIG. 20 shows a process of adhering a separator of an electrode assembly with the separator adhesion apparatus of FIG. 13. In the separator adhesion apparatus 200, the first adhesive member 220 is arranged on the long side of the electrode assembly 2, and the second adhesive member 230 is arranged on the short side of the electrode assembly 2. Since the other descriptions overlap with those described in FIG. 9, refer to the description described above in FIG. 9.

FIGS. 21 and 22 each exemplarily show an adhesion area where a separator of an electrode assembly is adhered with a separator adhesion apparatus according to an embodiment of the present disclosure. The portion marked as area A₃ on the long side of the separator 20 between adjacent electrode plates 10 can be heated and/or pressed by the first adhesive member 220. It is sufficient that area A₃ is formed on the separator 20 between adjacent electrode plates 10, the electrode plates 10 are not adhered and the electrode plates 10 are not exposed to the outside, and the shape and number of the area A₃ are not particularly limited.

Meanwhile, as described in detail in FIG. 17, and the like, the portions marked as area A₄ located on the short side of the separator 20 at both sides centered on the electrode lead 11 shown in FIG. 21 are heated and/or pressed by the protrusion part 232a of the adhesion part 232 of the second adhesive member 230. As described above, since there is no harm that the electrode plate 10/electrode lead 11 may be partially pressed by the protrusion part 232a of the adhesion part 232, an adhesion area can be formed widely on the separator 20 except for the area where the electrode plate 10/electrode lead 11 is formed in the portion marked as area A₄.

In the case of FIG. 22, if the portion marked as area A₃ on the long side of the separator 20 is divided and formed into plural parts, the electrolyte can be more easily impregnated between the separators 20 in the wetting process.

Meanwhile, the separator adhesion apparatuses 100 and 200 according to FIGS. 4 to 22 of the present disclosure are not limited only to those shown in FIGS. 4 and 13, and it goes without saying that some of the components of the first adhesive member 120 and the second adhesive member 130 of the separator adhesion apparatus 100 of FIGS. 4 to 12 and some of the components of the first adhesive member 220 and the second adhesive member 230 of the separator adhesion apparatus 200 of FIGS. 13 to 22 can be partially mixed and combined to realize the invention.

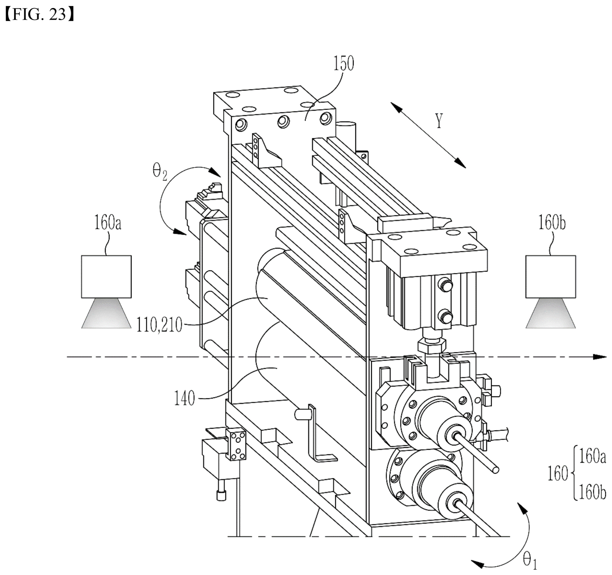

FIG. 23 shows an embodiment of the separator adhesion apparatus according to FIG. 4. As described above, the separator adhesion apparatus 100 includes a main bodies 110 and 210 having first adhesive members 120 and 220 and second adhesive members 130 and 230, and a support unit 140, wherein the main bodies 110 and 210 and the support unit 140 are mounted on a frame 150. In FIG. 22, for convenience, illustrations of the first adhesive members 120 and 220 and the second adhesive members 130 and 230 are omitted, and reference is made to those illustrated in FIGS. 4 to 21. An inspection unit 160 may be further included in at least one of the front and rear ends based on the direction P of the advancing path of the electrode assembly 1. The first inspection unit 160a disposed at the front end detects the position of the electrode assembly 1 before adhesion, and the second inspection unit 160b disposed at the rear end detects the position of the electrode assembly 1 after adhesion. The first inspection unit 160a inspects the alignment accuracy of the electrode assembly 1 to be drawn in between the main bodies 110 and 210 and the support unit 140, and if there is an abnormality in the alignment, it enables Y-axis correction and/or θ (θ₁, θ₂) angle correction. The second inspection unit 160b inspects the alignment accuracy of the electrode assembly 1 pulled out between the main bodies 110 and 210 and the support unit 140, and if it detects an abnormality in the alignment, it can inspect whether the electrode assembly 1 to which the separator 20 has been adhered is defective, or it can correct the alignment accuracy of the electrode assembly 1 to be subsequently drawn in between the main bodies 110 and 210 and the support unit 140 to which the adhesion of the separation membrane 20 is performed.

Although the preferred embodiments of the present disclosure have been described in detail above, the scope of the present disclosure is not limited thereto, and various modifications and improvements of those skilled in the art using the basic concepts of the present disclosure defined in the following claims also belong to the scope of rights.

### [DESCRIPTION OF REFERENCE NUMERALS]

100: separator adhesion apparatus
110: main body
120: first adhesive member
121: protrusion part
122: coupling part
123: mounting part
130: second adhesive member
131: adhesion part
131a: protrusion part
132: position adjustment part
132a: mounting hole
133: moving rail
133a: mounting groove
140: support unit
150: frame
160: inspection unit
200: separator adhesion apparatus
210: main body
220: first adhesive member
221: adhesion part
222: base part
230: second adhesive member
231: base part
232: adhesion part
233: cover
234: fastener

## Claims

1. A separator adhesion apparatus which adheres stacked separators of an electrode assembly in which a separator and an electrode are alternately stacked, the separator adhesion apparatus comprising:
a main body, and a first adhesive member and a second adhesive member provided on an outer surface of the main body,
wherein the first adhesive member is disposed so as to adhere the separator in a direction perpendicular to an advancing direction of the electrode assembly, and
wherein the second adhesive member is disposed so as to adhere the separator along an advancing direction of the electrode assembly.

2. The separator adhesion apparatus according to claim 1, wherein:
the main body has a columnar shape,
the first adhesive member is disposed along the longitudinal direction of the main body, and
the second adhesive member is disposed along an outer peripheral surface of the main body.

3. The separator adhesion apparatus according to claim 1, wherein:
the first adhesive members are provided in plural numbers, and the plurality of first adhesive members are respectively arranged in parallel in a plurality of columns, and
the second adhesive members are provided in plural numbers, and the plurality of second adhesive members are each disposed between two adjacent first adhesive members.

4. The separator adhesion apparatus according to claim 3, wherein:
the plurality of the first adhesive members are selectively detachable in the whole or a part of the plurality of columns.

5. The separator adhesion apparatus according to claim 3, wherein:
the first adhesive member is partitioned into plural parts and arranged in a row in a single column, and
the first adhesive member partitioned into plural parts is selectively detachable in whole or in part.

6. The separator adhesion apparatus according to claim 1, wherein:
the first adhesive member comprises a protrusion part disposed along the longitudinal direction of the first adhesive member.

7. The separator adhesion apparatus according to claim 1, wherein:
the first adhesive member comprises a coupling part capable of coupling the first adhesive member to the main body.

8. The separator adhesion apparatus according to claim 1, wherein:
the second adhesive member comprises:
a position adjustment part that is disposed apart from the first adhesive member but is movable in a direction parallel to the first adhesive member to adjust the position of the second adhesive member; and
an adhesion part that is disposed along an advancing direction of the electrode assembly from a side of the position adjustment part and adheres the separator.

9. The separator adhesion apparatus according to claim 8, wherein:
the second adhesive member further comprises a moving rail spaced apart from the first adhesive member on the outer surface of the main body and disposed in parallel with the first adhesive member, and
the position adjustment part is movable along the moving rail.

10. The separator adhesion apparatus according to claim 9, wherein:
the moving rail of the second adhesive member comprises a plurality of mounting grooves disposed in a column along the moving rail, and
the position adjustment part of the second adhesive member is mounted to a mounting groove at a desired position among the plurality of mounting grooves of the moving rail.

11. The separator adhesion apparatus according to claim 9, wherein:
the first adhesive member is provided in plural numbers and disposed in parallel in a plurality of columns, and
the position adjustment part and the moving rail of the second adhesive member are disposed between two adjacent first adhesive members.

12. The separator adhesion apparatus according to claim 8, wherein:
the adhesion part of the second adhesive member is provided one by one to both sides centered on the position adjustment part.

13. The separator adhesion apparatus according to claim 8, wherein:
the adhesion part of the second adhesive member comprises a protrusion part disposed along the extending direction of the adhesion part.

14. The separator adhesion apparatus according to claim 8, wherein:
a height of the position adjustment part from the main body is lower than a height of the adhesion part from the main body.

15. The separator adhesion apparatus according to claim 14, wherein:
the width of the position adjustment part is larger than the width of an electrode lead of the electrode assembly, and the position adjustment part is disposed on the electrode lead of the electrode assembly, so that the electrode lead is not adhered when adhering one side of the electrode assembly by the adhesion part.

16. The separator adhesion apparatus according to claim 1, wherein:
the second adhesive member comprises a base part and an adhesion part disposed on the base part,
the adhesion part comprises a pair of protrusion parts, wherein the pair of protrusion parts are disposed apart from each other on both sides of the adhesion part, and
an area spaced apart from each other between the pair of protrusion parts is disposed on an electrode lead of the electrode assembly, wherein each of the pair of protrusion parts is disposed on both sides of the electrode lead to adhere the separator on both sides of the electrode lead by pressing or heating.

17. The separator adhesion apparatus according to claim 16, wherein: the adhesion part of the second adhesive member has a strength enough to adhere the separator, but has an elastic force enough to prevent an electrode plate or electrode lead of the electrode assembly from being cracked even when the electrode plate or electrode lead is pressed by the second adhesive member.

18. The separator adhesion apparatus according to claim 16, wherein:
the material of the adhesion part of the second adhesive member is made of any one of rubber, Teflon, polymer plastic, and engineering plastic, or a mixture thereof.

19. The separator adhesion apparatus according to claim 16, wherein:
the pair of protrusion parts is each disposed on the separator on both sides of the electrode lead, but are disposed so as to overlap with a part of an electrode plate of the electrode assembly or a part of the electrode lead.

20. The separator adhesion apparatus according to claim 16, wherein:
each of the pair of protrusion parts further comprises a first tapered part, wherein the first tapered part is provided at the end of the adhesion part where the pair of protrusion parts face each other.

21. The separator adhesion apparatus according to claim 16, wherein:
each of the pair of protrusion parts further comprises a second tapered part, wherein the second tapered part is provided at the end where the protrusion parts of each of the adhesion parts provided at both ends of the main body face each other.

22. The separator adhesion apparatus according to claim 16, wherein:
the second adhesive member further comprises a cover disposed on the adhesion part,
wherein the cover further comprises opening parts on both sides in which the protrusion parts are exposed, and
the cover is coupled to the base part, and the remaining parts of the adhesion part excluding the protrusion parts are interposed and fixed between the cover and the base part.

23. The separator adhesion apparatus according to claim 16, wherein:
the base part comprises a coupling part, the cover comprises a coupling hole, and the cover penetrates through the coupling hole by a fastener of the second adhesive member, so that the base part is coupled to the coupling part.

24. The separator adhesion apparatus according to claim 16, wherein:
the first adhesive member comprises a mounting part having steps at both ends so that the second adhesive member is mounted, wherein the position of the second adhesive member can be adjusted in the longitudinal direction of the main body within the mounting part.

25. The separator adhesion apparatus according to claim 1, wherein:
the first adhesive member comprises,
a base part formed along the longitudinal direction of the first adhesive member and coupled to the main body; and
an adhesion part formed along the longitudinal direction of the base part and coupled onto the base part.

26. The separator adhesion apparatus according to claim 25, wherein:
the adhesion part of the first adhesive member is made of metal, or is made of any one of rubber, Teflon, polymer plastic, engineering plastic, or a mixture thereof.

27. The separator adhesion apparatus according to claim 25, wherein:
the adhesion part of the first adhesive member is divided along the longitudinal direction of the first adhesive member and partitioned into plural parts.

28. The separator adhesion apparatus according to claim 1, wherein:
the first adhesive member and the second adhesive member adhere areas spaced from the edges of the electrodes,
wherein the first adhesive member adheres a long side of the electrode assembly, and the second adhesive member adheres a short side of the electrode assembly.

29. The separator adhesion apparatus according to claim 1, wherein:
the electrode assembly is connected in plural numbers and provided in a sheet shape,
the first adhesive member adheres the separator in the area between adjacent electrodes, and
the second adhesive member adheres the edge parallel to the advancing direction of the electrode assembly sheet, but does not adhere an electrode lead.

30. The separator adhesion apparatus according to claim 1,
further comprising a support unit disposed so as to face the main body,
wherein the electrode assembly passes between the main body and the support unit.

31. The separator adhesion apparatus according to claim 1,
further comprising an inspection unit that inspects the alignment accuracy of the electrode assembly in at least one of front and rear ends of the advancing direction of the electrode assembly.

32. The separator adhesion apparatus according to claim 1, wherein:
the first adhesive member and the second adhesive member adhere the separator by pressing or heating.

33. An electrode assembly produced by the separator adhesion apparatus according to claim 1.
